**Europäisches Patentamt**

**European Patent Office**

**Office européen des brevets**

(19)

(11) Publication number: **0 101 247**
**B1**

(12)

# EUROPEAN PATENT SPECIFICATION

(45) Date of publication of patent specification: **18.01.89**

(51) Int. Cl.⁴: **G 01 G 3/14, G 01 G 3/142**

(21) Application number: **83304475.3**

(22) Date of filing: **03.08.83**

(54) **Compensated multi-load cell scale.**

(30) Priority: **17.08.82 US 408830**

(43) Date of publication of application:
**22.02.84 Bulletin 84/08**

(45) Publication of the grant of the patent:
**18.01.89 Bulletin 89/03**

(84) Designated Contracting States:
**BE CH DE FR GB IT LI SE**

(56) References cited:
**DE-A-2 809 655**
**DE-A-3 005 449**
**US-A-3 576 128**
**US-A-3 966 003**
**US-A-3 968 683**
**US-A-4 138 882**
**US-A-4 261 429**

(73) Proprietor: **Toledo Scale Corporation**
**350 W Wilson Bridge Road**
**Columbus, Ohio 43085 (US)**

(72) Inventor: **Griffen, Neil Charles**
**3435 Barr**
**Columbus Ohio 43224 (US)**

(74) Representative: **Skinner, Michael Paul et al**
**c/o Swindell & Pearson 48 Friar Gate**
**Derby DE1 1GY (GB)**

Courier Press, Leamington Spa, England.

# EP 0 101 247 B1

## Description

Background of the invention

The present invention relates to an improved scale arrangement comprising three or more load cells which are compensated for both lateral and longitudinal displacement of the load on the scale platter or platform and to a method of accurately compensating the scale so that the output of the scale is independent of the position of the weight on the scale.

U.S. Patent No. 3,576,128 granted April 27, 1971 to Lockery discloses a dual beam load cell compensated for longitudinal displacement of the load. Copending application of Griffen, Serial No. 272,928 filed June 12, 1981 (US—A—4380175 published April 19, 1983) discloses an improved compensating arrangement for a dual beam load cell. U.S. Patent No. 4,282,748 granted August 11, 1981 to Lockery et al relates to a single beam load cell wherein the radius of the fillet between the load section and the mounting section is adjusted so that a load cell becomes substantially insensitive to inboard-outboard loading. Such adjustments are difficult to make and time consuming. Another compensated single beam load cell arrangement is disclosed in copending application of Griffen et al, Serial No. 358,195 filed March 15, 1982 (US—A—4453609 published June 12, 1984). U.S. Patents 2,499,033 granted February 28, 1950 to Oberholtzer; No. 4,261,195 granted April 14, 1981 to Lockery; and No. 4,261,429 granted April 14, 1981 to Lockery are also of interest.

U.S. Patent No. 3,968,683 (Ormond) describes weighing apparatus including three or more load cells. After the strain gages of the various load cells have been arranged in a bridge circuit, a load is positioned over one load cell and then another. The output signals from the bridge circuit are compared to determine the load cells exhibiting the most sensitivity to load position changes. The strain gages of the two most sensitive load cells are then shunted by compensating resistors to reduce their sensitivity.

Summary of the invention

Most of the above compensated scale arrangements are limited to one or at most two load cells and thus are limited to relatively small capacity scales. Also, the load cells of these scale arrangements employ four strain gages per load cell. The approach suggested by Ormond is labourious and provides only incomplete scale compensation. The invention provides weighing apparatus comprising a load receiving platform, at least four load cells supporting the platform, each of the load cells having only two strain gages mounted thereon, the strain gages of the load cells being connected in at least one electrical bridge circuit to provide a signal indicative of the magnitude of the load on the platform, and compensating resistors connected in circuit with at least one strain gage of at least all but one of the load cells to substantially eliminate changes in the output of the bridge circuit with changes in the position of the load on the platform. It has been discovered that with three or more load cells per scale only two strain gages need be provided for each of the load cells. In addition, the strain gages on the load cells are connected in one of several electrical bridge circuits or arrangements and compensating resistor networks connected either in parallel with respective ones of the load cells or in series with respective ones of the load cells. In addition, a novel bridge circuit arrangement is disclosed wherein a minimum number of compensating resistors are interconnected with various ones of the strain gages. In addition, various arrangements and methods have been devised and described for rapidly calculating the magnitude of the various compensating resistor networks. As described herein, a number of different types of load cells may be employed with satisfactory compensating results. The scale mechanism including the platter or platform may be supported on the load cells in any one of a number of known methods including the "gage plate" arrangement shown in U.S. Patent No. 4,261,429 to Lockery.

Brief description of the drawings

Figure 1 shows a plan view of an exemplary scale arrangement in accordance with the present invention embodying four load cells.

Figure 2 shows a side view of the exemplary scale in accordance with the present invention shown in Figure 1.

Figure 3 shows in greater detail one of the load cells suitable for use in the exemplary scale of Figures 1 and 2.

Figure 4 shows another moment insensitive load cell suitable for use in the exemplary scales shown in Figures 1 and 2.

Figure 5 shows a shear type load cell suitable for use in the scale arrangement of Figures 1 and 2.

Figure 6 shows another exemplary embodiment of the invention employing 10 load cells.

Figure 7 shows one form of a bridge circuit for interconnecting the strain gages on the load cells.

Figure 8 shows another form of a bridge circuit also suitable for interconnecting the strain gages of the load cells in which the compensating resistors are connected in parallel with the strain gages.

Figure 9 shows another bridge arrangement similar to the arrangement of Figure 8 in which the strain gages are connected in a different manner.

Figure 10 shows still another bridge arrangement similar to Figures 8 and 9 for interconnecting the strain gages of an odd number of load cells.

2

Figure 11 shows a bridge circuit arrangement in which the compensating resistors are connected in series with the strain gages.

Figure 12 shows a bridge circuit similar to the arrangement of Figure 11 for interconnecting the strain gages of the load cells in a different manner.

Figure 13 shows a gage plate arrangement of the scale platform which may be compensated in accordance with the present invention.

General description

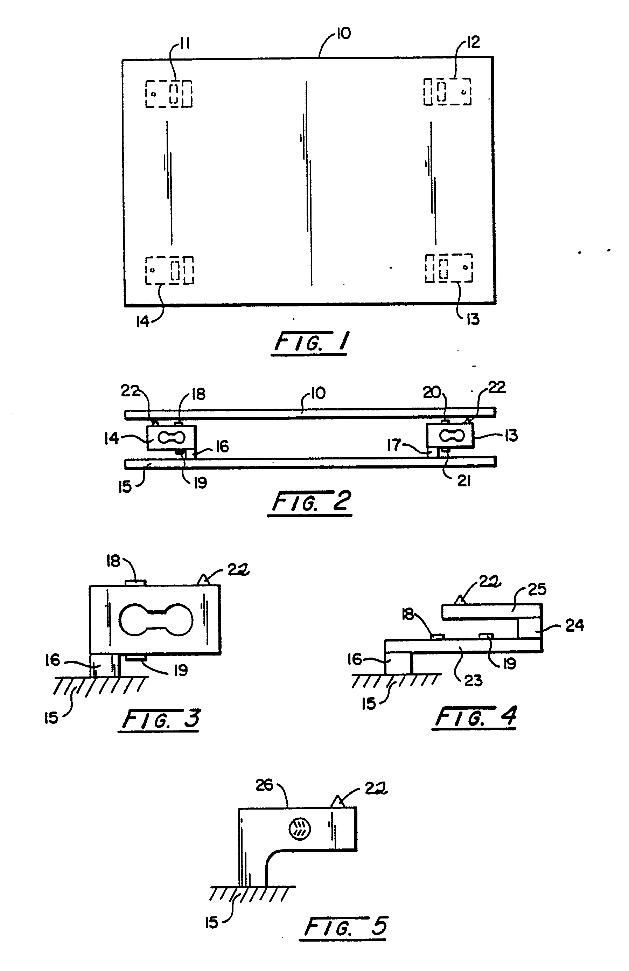

Figures 1 and 2 show an exemplary embodiment of the present invention incorporating four load cells. The scale platter 10 is supported by four load cells 11, 12, 13 and 14. These load cells are arranged at or near the corners of the platter 10 as shown.

As shown in Figure 2, the load cells are supported on a base 15 by supports 16 and 17. The particular load cells shown are of a conventional dual beam type but, as shown in Figure 2, each load cell has only one strain gage on each beam instead of two as the conventional dual beam load cell. These strain gages are shown at 18, 19, 20 and 21.

The platter is supported at the positions indicated by the support structures 22. The load cells of Figures 1 and 2 are shown in greater detail in Figure 3. As shown in Figure 3, a dual beam load cell is supported on base 15 by support 16. This load cell is provided with only two strain gages 18 and 19 and a support structure 22. The structure 22 is shown as a cone defining a bearing point between the load cell and the platter. The invention is not limited, however, to such a structure but may include any of the various conventional types of weight bearing structures to transmit the load substantially vertical from the platter to the load cell. Such structures include ball bearings and various forms of pins or other types of structures which reduce or eliminate the effect of lateral forces.

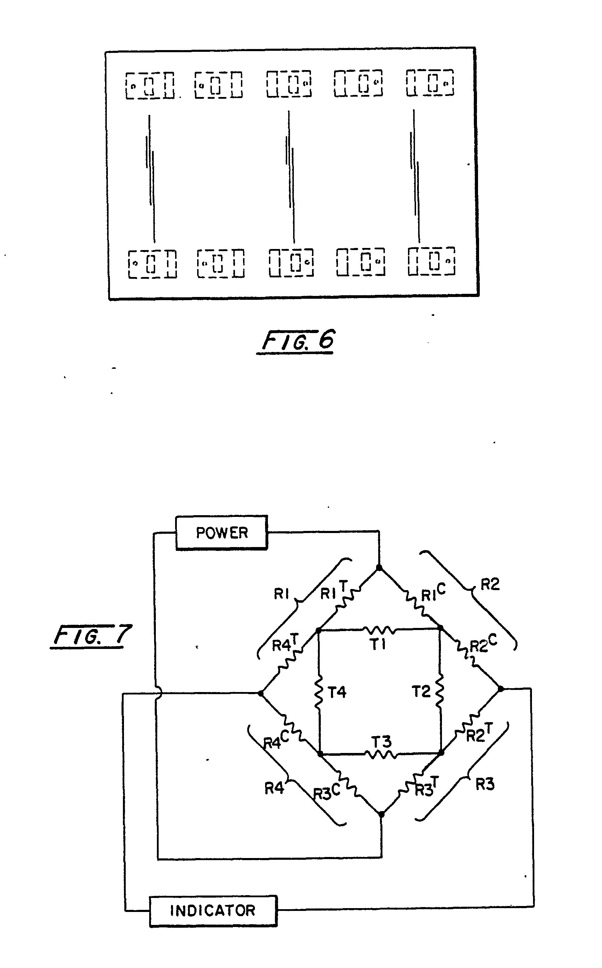

The invention is not limited to scale arrangements employing only dual beam load cells but may also employ other conventional types of load cells such as the single beam load cell shown in Figure 4. Here the single beam 23 is supported by support 16 on base 15. This single beam load cell is provided with two strain gages 18 and 19 instead of four as in a conventional single beam load cell. While moment insensitive loading is not essential or required in any of the load cells employed in accordance with the present invention, such arrangement is shown in Figure 4 which comprises a member 25 supported on the load cell by support member 24. The member 25 is provided so that the support point 22 will be between the strain gages 18 and 19. This arrangement renders the load cell structure insensitive to bending moments applied to the load cell beam structure. As indicated above, similar moment insensitive arrangements may be applied to the dual beam load cell of Figure 3 as well as to the load cell arrangement of Figure 5.

Figure 5 shows a conventional shear beam load cell supported on support 15. The shear beam 26 has a load bearing point 22 which may be of any suitable structure similar to the load supporting structures 22 of Figures 3 and 4. The shear beam structure 26 of Figure 5 may be employed in the scale arrangements shown in Figures 1 and 2 in place of the dual shear beam shown in Figure 3 or the single beam load cell shown in Figure 4.

Figure 6 shows a plan view of a much larger scale arrangement which embodies 10 load cells which may be of the type shown in Figures 3, 4 or 5. Such a scale arrangement may be advantageously employed on occasion for truck scales, railroad car scales, bus scales and the like.

A feature of the present invention relates to adjusting the various load cells so that the output of the combined number of load cells is substantially independent of the exact position of the load or weight placed on the scale platter or platform.

If all of the load cells of a given scale could be made identical, mounted identical, and if the scale platform or platter or load structure could be made uniform throughout its structure, then the combined output of the load cells theoretically should be independent of the position of a weight or load on the scale platter or platform. However, these conditions are very difficult to obtain in practice and very expensive.

Some of the factors which tend to cause the combined output of the load cells to vary by a small amount depending upon the position of the load or weight on the scale platter or platform include some of the following: 1) small variations in the positioning of the load cells; 2) small variations in the structure of the scale platform or platter; 3) small variations in the composition of different portions of the scale platform or platter; 4) small variations in the flexure pattern of the platter or platform.

As indicated above, in accordance with the present invention when the scale platform or platter is supported on a plurality of load cells greater than two, only two strain gages, one subject to tension and the other subject to compression, are required on each of the load cells. These strain gages are connected in an electrical bridge circuit arrangement in which the strain gages on any one load cell are connected in adjacent arms of the electrical bridge. Figure 7 shows a novel bridge circuit arrangement in which a single compensating resistor may be connected around the strain gages on the respective load cells. With the bridge circuit arrangement of Figure 7 the coupling between all four load cells and between the elements of the bridge circuit may be compensated.

After the scale has been constructed and assembled as described above, but with the compensating resistors disconnected, one pair of the bridge terminals is connected to the power source and the other pair of bridge terminals connected to the indicator. The indicator may be calibrated in any described units but for convenience the units will be referred to herein as "counts".

3

After the bridge circuit has been connected as described above, a test weight is then placed on the scale platform or platter. The test weight is first placed on the platter over one of the load cells and the output of the indicator noted. The test weight is then moved to and placed over another of the load cells. The output is again noted. This procedure is then repeated. Thus, for the exemplary scale shown in Figures 1 and 2, the test weight is placed at or near the four corners over or near the four load cells.

Next it is desired to compute the proper compensating resistance or resistance networks to be connected to the strain gages of the various load cells. The computations to be performed vary with the different electrical bridge circuits which may be employed in combination with the load cells of any given scale. Assume first that the scale to be tested has an electrical bridge circuit in accordance with Figure 7.

In order to determine the desired compensating resistors to be connected to the strain gages of the various load cells, it is desirable to first develop a program or method of procedure to compute the various resistor values.

The general expression for the output of a strain gage bridge is

$$\frac{DE}{V} = \frac{1}{4} \left\{ \frac{DR1}{R1} - \frac{DR2}{R2} + \frac{DR3}{R3} - \frac{DR4}{R4} \right\} \qquad (1)$$

Here the R refers to the resistance of the arm of the bridge and DR refers to the change in resistance of that arm. There are four arms so the R's are labeled R1 through R4. By convention R1 and R3 usually refer to tension gages or resistances that increase with load on the scale or span. R2 and R4 usually refer to compression gages or resistances that decrease with span. DE/V is the output or change in output of the bridge in response to a load or weight placed on the scale. This output may be in any suitable units designated as counts herein.

As indicated above, a single compensating resistor is provided for the strain gages of each of the load cells in the bridge circuit arrangement of Figure 7. This circuit arrangement may be transformed into an equivalent conventional bridge circuit arrangement by changing the three "delta" connected resistors at each corner into the equivalent "star" or "Y" circuit arrangement. (See *Introductory Circuit Analysis,* 3rd Edition, by Boylestad published by Charles E. Merrill Publishing Co. of Columbus, Toronto, London, Sydney, 1978, pages 150—156).

Thus, the equivalent ER1, ER2, ER3, and ER4 are as follows:

$$ER1 = \frac{(T1)(R1^T)}{T1+R1^T+R1^C} + \frac{(T4)(R4^T)}{T4+R4^T+R4^C}$$

$$ER2 = \frac{(T2)(R2^C)}{T2+R2^C+R2^T} + \frac{(T1)(R1^C)}{T1+R1^C+R1^T}$$

$$ER3 = \frac{(T3)(R3^T)}{R3^C+R3^T+T3} + \frac{(T2)(R2^T)}{R2^T+R2^C+T2} \qquad (2)$$

$$ER4 = \frac{(T3)(R3^C)}{T3+R3^C+R3^T} + \frac{(T4)(R4^C)}{T4+R4^C+R4^T}$$

where $R1^T$, $R2^T$, $R3^T$, and $R4^T$ are the resistances of the strain gages in tension in the respective load cells 1, 2, 3, and 4. $R1^C$, $R2^C$, $R3^C$, and $R4^C$ are the resistances of the strain gages in compression on the respective load cells:

The change in equivalent resistance due to weight placed on the scale becomes

$$EDR1 \cong \frac{(T1)(DR1^T)}{T1+R1^T+R1^C} + \frac{(T4)(DR4^T)}{T4+R4^T+R4^C}$$

$$EDR2 \cong \frac{(T2)(DR2^C)}{T2+R2^T+R2^C} + \frac{(T1)(DR1^C)}{T1+R1^T+R1^C}$$

$$EDR3 \cong \frac{(T3)(DR3^T)}{T3+R3^T+R3^C} + \frac{(T2)(DR2^T)}{T2+R2^T+R2^C}$$

$$EDR4 \cong \frac{(T3)(DR3^C)}{T3+R3^T+R3^C} + \frac{(T4)(DR4^C)}{T4+R4^T+R4^C}$$

(3)

Now assume that $DR^T = -DR^C = DR$, $G = R^T = R^C$, and $R^T + R^C$ is substantially constant and equal to 2G. This allows the general expression to be written as

$$\frac{DE}{V} = \frac{1}{4} \left\{ \frac{\dfrac{(T1)(DR1^T)}{T1+2G} + \dfrac{(T4)(DR4^T)}{T4+2G}}{\dfrac{(T1)(R1^T)}{T1+2G} + \dfrac{(T4)(R4^T)}{T4+2G}} \right.$$

$$- \frac{\dfrac{(T2)(DR2^C)}{T2+2G} + \dfrac{(T1)(DR1^C)}{T1+2G}}{\dfrac{(T2)(R2^C)}{T2+2G} + \dfrac{(T1)(R1^C)}{T1+2G}}$$

(4)

$$+ \frac{\dfrac{(T3)(DR3^T)}{T3+2G} + \dfrac{(T2)(DR2^T)}{T2+2G}}{\dfrac{(T3)(R3^T)}{T3+2G} + \dfrac{(T2)(R2^T)}{T2+2G}}$$

$$\left. - \frac{\dfrac{(T3)(DR3^C)}{T3+2G} + \dfrac{(T4)(DR4^C)}{T4+2G}}{\dfrac{(T3)(R3^C)}{T3+2G} + \dfrac{(T4)(R4^C)}{T4+2G}} \right\}$$

Now the effect of the compensating resistors T1, T2, T3, and T4 is to reduce or attenuate the output of the respective load cell. Thus, assume an attenuation factor A such that

$$A = \frac{T}{T+2G}.$$

Since the output of each load cell is slightly different and it is desired to individually adjust the output, an attenuation factor for each load cell A1, A2, A3, and A4 is assumed.
Substituting

$$A = \frac{T}{T+2G}$$

the general equation becomes

$$\frac{DE}{V} = \frac{1}{4} \left\{ \frac{(A1)(DR1^T)+(A4)(DR4^T)}{(A1)(R1^T)+(A4)(R4^T)} + \frac{(A2)(DR2^C)+(A1)(DR1^C)}{(A2)(R2^C)+(A1)(R1^C)} \right.$$

$$\left. + \frac{(A3)(DR3^T)+(A2)(DR2^T)}{(A3)(R3^T)+(A2)(R2^T)} + \frac{(A3)(DR3^C)+(A4)(DR4^C)}{(A3)(R3^C)+(A4)(R4^C)} \right\} \qquad (5)$$

which can be written as

$$\frac{DE}{V} = \frac{1}{4G} \left\{ (DR1)\left( \frac{A1}{A1+A2} + \frac{A1}{A1+A4} \right) \right.$$

$$+ (DR2)\left( \frac{A2}{A2+A3} + \frac{A2}{A2+A1} \right)$$

$$+ (DR3)\left( \frac{A3}{A3+A4} + \frac{A3}{A3+A2} \right) \qquad (6)$$

$$\left. + (DR4)\left( \frac{A4}{A4+A1} + \frac{A4}{A4+A3} \right) \right\}$$

When the test weight is placed on the scale over the first load cell, the contribution of the other load cells is so small in comparison to the output of the No. 1 load cell that such contributions may be ignored. Thus, the above equation becomes

$$\frac{DE1}{V} \cong \frac{(DR1)}{4G} \left( \frac{A1}{A1+A2} + \frac{A1}{A1+A4} \right) \qquad (7)$$

Similarly, when the test weight is placed in succession over the No. 2, 3, and 4 load cells, the above equation becomes, respectively,

$$\frac{DE2}{V} \cong \frac{(DR2)}{4G} \left( \frac{A2}{A2+A3} + \frac{A2}{A2+A1} \right) \qquad (8)$$

$$\frac{DE3}{V} \cong \frac{(DR3)}{4G} \left( \frac{A3}{A3+A4} + \frac{A3}{A3+A2} \right) \qquad (9)$$

$$\frac{DE4}{V} \cong \frac{(DR4)}{4G} \left( \frac{A4}{A4+A1} + \frac{A4}{A4+A3} \right) \qquad (10)$$

Also, as pointed out above, the output DE/V is called a "Span". In addition, initially the A's are all 1 so the above equations become, respectively,

$$\text{Span } 1 = \frac{DR1}{4G} \text{ or } DR1 = 4G \text{ Span } 1$$

$$\text{Span } 2 = \frac{DR2}{4G} \text{ or } DR2 = 4G \text{ Span } 2$$

$$\text{Span } 3 = \frac{DR3}{4G} \text{ or } DR3 = 4G \text{ Span } 3$$

$$\text{Span } 4 = \frac{DR4}{4G} \text{ or } DR4 = 4G \text{ Span } 4$$

(11)

Next, a series of iterative computations are performed in accordance with the following equations in which the above equivalents are substituted.

$$\text{Span } 1_N = \text{Span } 1_0 \left( \frac{A1}{A1+A2} + \frac{A1}{A1+A4} \right)_N$$

$$\text{Span } 2_N = \text{Span } 2_0 \left( \frac{A2}{A2+A3} + \frac{A2}{A2+A1} \right)_N$$

$$\text{Span } 3_N = \text{Span } 3_0 \left( \frac{A3}{A3+A4} + \frac{A3}{A3+A2} \right)_N$$

$$\text{Span } 4_N = \text{Span } 4_0 \left( \frac{A4}{A4+A1} + \frac{A4}{A4+A3} \right)_N$$

where $\text{Span } 1_0$, $\text{Span } 2_0$, $\text{Span } 3_0$, and $\text{Span } 4_0$ are the values obtained with the test weight over the respective load cells.

For the first computation, the A for the highest Span is decremented a small fraction, 0.01 for example, and then all the Spans computed with this decremented A and all the other A's still at 1.

For the next computation, the same A is decremented another 0.01, for example, and all the Spans again computed. This process is then repeated until a value of the highest Span is reduced below the value of the next highest Span. Then the A for the new highest Span is decremented for each of the succeeding computations until the next highest Span is reached. The process is repeated until such time as all of the Spans are substantially equal. At this time, the iterative computations are terminated and the value of the respective compensating resistors determined from the equation

$$A = \frac{T}{T+2G}$$

The following table shows the results of a complete series of iterative computations required to determine the value of the required compensating resistors.

| SPAN1 | SPAN2 | SPAN3 | SPAN4 | A1 | A2 | A3 |
|---|---|---|---|---|---|---|
| 2002 | 2100 | 2047 | 1951 | 1 | 1 | 1 |
| SPAN1 | SPAN2 | SPAN3 | SPAN4 | A1 | A2 | A3 |
| 2007.03 | 2089.45 | 2052.14 | 1951 | 1 | .99 | 1 |
| SPAN1 | SPAN2 | SPAN3 | SPAN4 | A1 | A2 | A3 |
| 2012.11 | 2078.79 | 2057.34 | 1951 | 1 | .98 | 1 |
| SPAN1 | SPAN2 | SPAN3 | SPAN4 | A1 | A2 | A3 |
| 2017.24 | 2068.02 | 2062.59 | 1951 | 1 | .97 | 1 |
| SPAN1 | SPAN2 | SPAN3 | SPAN4 | A1 | A2 | A3 |
| 2022.43 | 2057.14 | 2067.89 | 1951 | 1 | .96 | 1 |
| SPAN1 | SPAN2 | SPAN3 | SPAN4 | A1 | A2 | A3 |
| 2022.43 | 2062.42 | 2057.6 | 1955.9 | 1 | .96 | .99 |
| SPAN1 | SPAN2 | SPAN3 | SPAN4 | A1 | A2 | A3 |
| 2027.67 | 2051.43 | 2062.96 | 1955.9 | 1 | .95 | .99 |
| SPAÑ1 | SPAN2 | SPAN3 | SPAN4 | A1 | A2 | A3 |
| 2027.67 | 2056.76 | 2052.57 | 1960.85 | 1 | .95 | .98 |
| SPAN1 | SPAN2 | SPAN3 | SPAN4 | A1 | A2 | A3 |
| 2032.96 | 2045.65 | 2057.98 | 1960.85 | 1 | .94 | .98 |
| SPAN1 | SPAN2 | SPAN3 | SPAN4 | A1 | A2 | A3 |
| 2032.96 | 2051.03 | 2047.49 | 1965.86 | 1 | .94 | .97 |
| SPAN1 | SPAN2 | SPAN3 | SPAN4 | A1 | A2 | A3 |
| 2038.31 | 2039.81 | 2052.96 | 1965.86 | 1 | .93 | .97 |
| SPAN1 | SPAN2 | SPAN3 | SPAN4 | A1 | A2 | A3 |
| 2038.31 | 2045.25 | 2042.36 | 1970.91 | 1 | .93 | .96 |
| SPAN1 | SPAN2 | SPAN3 | SPAN4 | A1 | A2 | A3 |
| 2043.71 | 2033.91 | 2047.89 | 1970.91 | 1 | .92 | .96 |
| SPAN1 | SPAN2 | SPAN3 | SPAN4 | A1 | A2 | A3 |
| 2043.71 | 2039.41 | 2037.18 | 1976.01 | 1 | .92 | .95 |
| SPAN1 | SPAN2 | SPAN3 | SPAN4 | A1 | A2 | A3 |
| 2039.12 | 2033.21 | 2042.77 | 1980.91 | .99 | .91 | .95 |
| SPAN1 | SPAN2 | SPAN3 | SPAN4 | A1 | A2 | A3 |
| 2039.12 | 2038.76 | 2031.94 | 1986.07 | .99 | .91 | .94 |
| SPAN1 | SPAN2 | SPAN3 | SPAN4 | A1 | A2 | A3 |
| 2034.48 | 2032.49 | 2037.6 | 1991.02 | .98 | .9 | .94 |
| SPAN1 | SPAN2 | SPAN3 | SPAN4 | A1 | A2 | A3 |
| 2034.48 | 2038.11 | 2026.66 | 1996.23 | .98 | .9 | .93 |
| SPAN1 | SPAN2 | SPAN3 | SPAN4 | A1 | A2 | A3 |
| 2029.81 | 2031.76 | 2032.37 | 2001.24 | .97 | .89 | .93 |
| SPAN1 | SPAN2 | SPAN3 | SPAN4 | A1 | A2 | A3 |
| 2029.81 | 2037.44 | 2021.32 | 2006.5 | .97 | .89 | .92 |
| SPAN1 | SPAN2 | SPAN3 | SPAN4 | A1 | A2 | A3 |
| 2025.09 | 2031.01 | 2027.1 | 2011.55 | .96 | .88 | .92 |
| SPAN1 | SPAN2 | SPAN3 | SPAN4 | A1 | A2 | A3 |
| 2030.8 | 2019.03 | 2032.94 | 2011.55 | .96 | .87 | .92 |
| SPAN1 | SPAN2 | SPAN3 | SPAN4 | A1 | A2 | A3 |
| 2030.8 | 2024.77 | 2021.77 | 2016.87 | .96 | .87 | .91 |

T1=16,800 ohms     T3=7,078 ohms
T2=4,685 ohms     T4=∞

The accuracy of the compensation is determined in part by size of the decrement of the A's employed in the iterative computations. In addition, when desired or required additional series of iterative computations may be performed using the results of the previous series as the beginning or Span for the next series of computations.

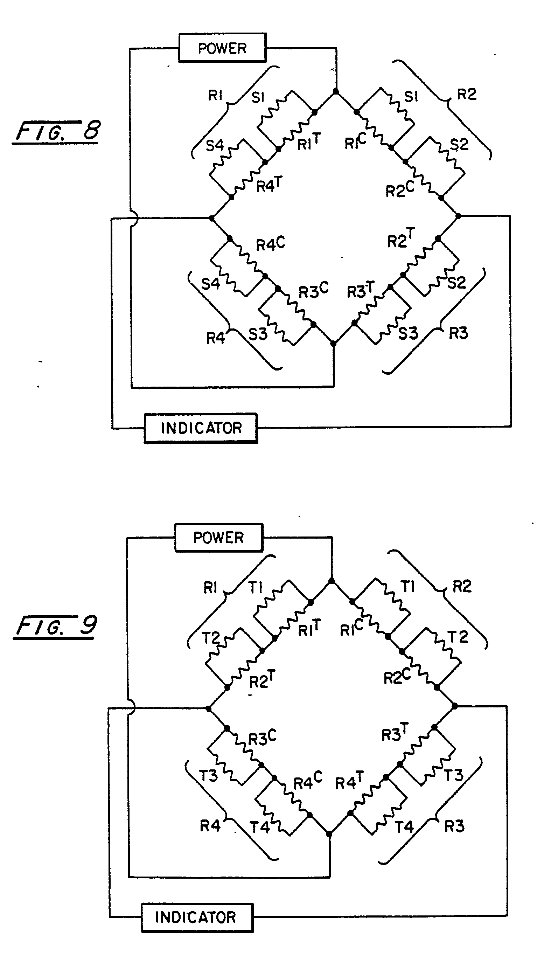

When it is desirable to provide a compensating resistor for each strain gage, the bridge circuit in accordance with Figure 8 may be employed. This arrangement is suitable for scales employing three or more load cells. Here the compensating resistor networks are connected in parallel with the strain gages.

As stated above, the general equation for the output of a strain gage bridge is

$$\frac{DE}{V} = \frac{1}{4} \left\{ \frac{DR1}{R1} - \frac{DR2}{R2} + \frac{DR3}{R3} - \frac{DR4}{R4} \right\} . \tag{1}$$

With reference to Fig. 8, the expressions for the R's are

$$R1 = \frac{R1^T(S1)}{R1^T + S1} + \frac{R4^T(S4)}{R4^T + S4}$$

$$R2 = \frac{R2^T(S2)}{R2^T + S2} + \frac{R1^T(S1)}{R1^T + S1}$$

$$R3 = \frac{R2^T(S2)}{R2^T + S2} + \frac{R3^T(S3)}{R3^T + S3} \tag{13}$$

$$R4 = \frac{R3^T(S3)}{R3^T + S3} + \frac{R4^T(S4)}{R4^T + S4}$$

Now assume that $R^T = R^C = G$. Also assume that

$$A = \frac{S}{S+G}.$$

The R's can be written as

$$R1 = (A1 + A4)G$$

$$R2 = (A1 + A2)G$$

$$R3 = (A2 + A3)G$$

$$R4 = (A3 + A4)G$$

The expression for DR is

$$DR = \frac{DR1^T(S1)(R1+S1) - DR1^T(S1)(R1)}{(R1+S1)^2}$$

$$DR = \left( \frac{S}{S+G} \right)^2 dR = A^2 dR$$

where dR is the change in gage resistance due to strain. Using this and the approximation $dR^T = -dR^C = dR$, the expression for the output can be written as

$$\frac{DE}{V} = \frac{1}{4} \left\{ \frac{(A1)^2(dR1)+(A4)^2(dR4)}{(A1)G+(A4)G} \right.$$

$$+ \frac{(A1)^2(dR1)+(A2)^2(dR2)}{(A1)G+(A2)G}$$

$$+ \frac{(A2)^2(dR2)+(A3)^2(dR3)}{(A2)G+(A3)G}$$

$$\left. + \frac{(A3)^2(dR3)+(A4)^2(dR4)}{(A3)G+(A4)G} \right\}$$

Rearranging the terms

$$\frac{DE}{V} = \frac{1}{4G} \left\{ DR1 \frac{(A1)^2}{A1+A2} + \frac{(A1)^2}{A1+A4} \right.$$

$$+ DR2 \frac{(A2)^2}{A2+A3} + \frac{(A2)^2}{A2+A1}$$

$$+ DR3 \frac{(A3)^2}{A3+A4} + \frac{(A3)^2}{A3+A2}$$

$$\left. + DR4 \frac{(A4)^2}{A4+A1} + \frac{(A4)^2}{A4+A3} \right\} \qquad (14)$$

This equation is similar to equation (6) above. Next, as before, a test weight is placed over each of the load cells in turn and the output or Span for each position recorded. By following the above steps of equations (7) through (11), equation (12) becomes equation (15) as follows:

$$\text{Span } 1_N = \text{Span } 1_0 \left( \frac{(A1)^2}{A1+A2} + \frac{(A1)^2}{A1+A4} \right)_N$$

$$\text{Span } 2_N = \text{Span } 2_0 \left( \frac{(A2)^2}{A2+A3} + \frac{(A2)^2}{A2+A1} \right)_N$$

$$\text{Span } 3_N = \text{Span } 3_0 \left( \frac{(A3)^2}{A3+A4} + \frac{(A3)^2}{A3+A2} \right)_N \qquad (15)$$

$$\text{Span } 4_N = \text{Span } 4_0 \left( \frac{(A4)^2}{A4+A1} + \frac{(A4)^2}{A4+A3} \right)_N$$

Thus, when a bridge circuit in accordance with Figure 8 is employed in a scale, the values of the compensating parallel resistors are determined by a series of iterative computations performed in accordance with equations (15) until all of the Spans are substantially equal in the same way as described above with reference to equation (12) where

$$S = \frac{AG}{1-A}$$

The accuracy of the compensation is determined in part by size of the decrement of the A's employed in the iterative computations. In addition, when desired or required additional series of iterative computations may be performed using the results of the previous series as the beginning or Span for the next series of computations.

Figure 9 shows a bridge circuit similar to the bridge circuit of Figure 8 wherein a different compensation pattern is involved. In the arrangement of Figure 9 the pattern of connections of the strain gages to the bridge is such that greater compensation is required between certain of the load cells than is required between other of the load cells, as, for example, the load cells of a long scale as shown in Figure 6. For scales incorporating strain gage bridge circuits in accordance with Figure 9, the values of the compensating resistors are determined in substantially the same manner as described above for the bridge circuit of Figure 8. After the equations are so determined a test weight is placed over each of the load cells in turn and the results recorded. Then a series of iterative calculations are performed as above to determine the value of the respective A's and then the values of the respective compensating resistors.

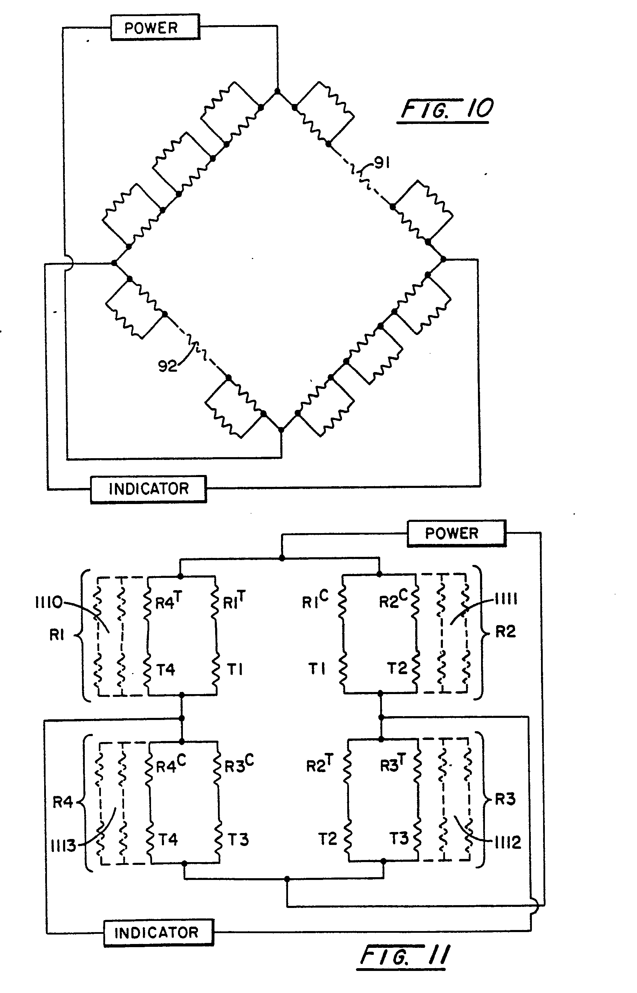

Bridge circuits similar to Figures 8 or 9 may be employed for scales having three or more load cells. For example, Figure 10 shows a bridge circuit arrange for five load cells. If it is desired to make such a bridge circuit symmetrical, resistors 91 and 92 may be added. While not necessary, such resistors are usually desirable.

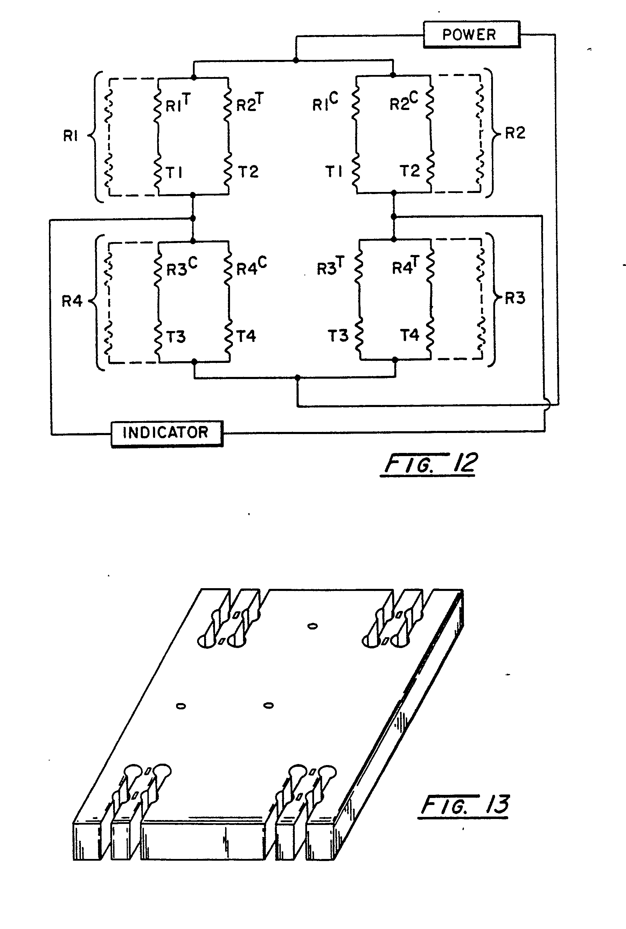

It is sometimes desirable to employ series compensating resistor networks instead of parallel compensating networks. Figure 11 shows a bridge arrangement wherein the compensating resistor networks are connected in series with the strain gages. This arrangement is also suitable for scale arrangements employing three or more load cells. The arrangements of Figures 11 and 12 are arranged for four load cells. However, additional load cell strain gages may be connected in parallel as indicated at 1110, 1111, 1112, and 1113.

For the bridge circuit of Figure 11, the same general strain gage bridge circuit equation (1) applies and the equations for the bridge arms are as follows.

$$\frac{DE}{V} = \frac{1}{4} \left\{ \frac{DR1}{R1} - \frac{DR2}{R2} + \frac{DR3}{R3} - \frac{DR4}{R4} \right\} \tag{1}$$

From Figure 11, it can be seen that the expression for the resistance of each arm is,

$$R1 = \frac{(R1^T + T1)(R4^T + T4)}{R1^T + T1 + R4^T + T4}$$

$$R2 = \frac{(R1^C + T1)(R2^C + T2)}{R1^C + T1 + R2^C + T2}$$

$$R3 = \frac{(R2^T + T2)(R3^T + T3)}{R2^T + T2 + R3^T + T3} \tag{16}$$

$$R4 = \frac{(R3^C + T3)(R4^C + T4)}{R3^C + T3 + R4^C + T4}$$

Using the approximations, $R1^T = R1^C = G$; $R2^T = R2^C = G$; etc.: $A = R/(R+T) = 1/(1+T/R)$, and

$$(R+T) = \frac{G}{A} = \frac{\left(\dfrac{G}{A1}\right)\left(\dfrac{G}{A4}\right)}{\dfrac{G}{A1} + \dfrac{G}{A4}} \times \frac{(A1)(A4)}{(A1)(A4)} \tag{17}$$

$$R1 = \frac{G}{A1 + A4} \tag{18}$$

Similarly

$$R2 = G/(A1+A2)$$

$$R3 = G/(A2+A3) \tag{19}$$

$$R4 = G/(A3+A4)$$

The differential or change in the arm resistance due to weight on the scale is

$$DR1 = \frac{DR1^T(R4^T+T4)+DR4^T(R1^T+T1)}{(R1^T+T1+R4^T+T4)} - \frac{(R1^T+T1)(R4^T+T4)(DR1^T+DR4^T)}{(R1^T+T1+R4^T+T4)^2} \tag{20}$$

$$= \frac{DR1^T\dfrac{G}{A4}+DR4^T\dfrac{G}{A1}}{\left(\dfrac{G}{A1}+\dfrac{G}{A4}\right)} - \frac{\left(\dfrac{G}{A1}\right)\left(\dfrac{G}{A4}\right)(DR1^T+DR4^T)}{\left(\dfrac{G}{A1}+\dfrac{G}{A4}\right)^2} \tag{21}$$

$$= \frac{\dfrac{G}{A1A4}(DR1^TA1+DR4^TA4)}{\dfrac{G}{A1A4}(A1+A4)} - \frac{\dfrac{G^2}{A1A4}(DR1^T+DR4^T)}{\dfrac{G^2}{A1^2A4^2}(A1+A4)^2} \tag{22}$$

$$= \frac{(DR1^TA1+DR4^TA4)(A1+A4)}{(A1+A4)^2} - \frac{A1A4(dR1^T+dR4^T)}{(A1+A4)^2} \tag{23}$$

$$DR1 = \left[(dR4^T)\frac{(A4)^2}{(A1+A4)^2}+(dR1^T)\frac{(A1)^2}{(A1+A4)^2}\right]$$

Similarly

$$DR2 = \left[(dR1^C)\frac{(A1)^2}{(A1+A2)^2}+(dR2^C)\frac{(A2)^2}{(A1+A2)^2}\right]$$

$$\tag{24}$$

$$DR3 = \left[(dR2^T)\frac{(A2)^2}{(A2+A3)^2}+(dR3^T)\frac{(A3)^2}{(A2+A3)^2}\right]$$

$$DR4 = \left[(dR3^C)\frac{(A3)^2}{(A3+A4)^2}+(dR4^C)\frac{(A4)^2}{(A3+A4)^2}\right]$$

Dividing DR by R

$$\frac{DR1}{R1} = \frac{1}{G}\left(\frac{DR1^T(A1)^2}{A1+A4} + \frac{DR4^T(A4)^2}{A1+A4}\right)$$

$$\frac{DR2}{R2} = \frac{1}{G}\left(\frac{DR1^C(A1)^2}{A1+A2} + \frac{DR2^C(A2)^2}{A1+A2}\right)$$

$$\frac{DR3}{R3} = \frac{1}{G}\left(\frac{DR2^T(A2)^2}{A2+A3} + \frac{DR3^T(A3)^2}{A2+A3}\right)$$

(25)

$$\frac{DR4}{R4} = \frac{1}{G}\left(\frac{DR3^C(A3)^2}{A3+A4} + \frac{DR4^C(A4)^2}{A3+A4}\right)$$

Thus, the bridge output is

$$\frac{DE}{V} = \frac{1}{4G}\left[DR1\left(\frac{(A1)^2}{A1+A2} + \frac{(A1)^2}{A4+A1}\right) + DR2\left(\frac{(A2)^2}{A2+A3} + \frac{(A2)^2}{A1+A2}\right)\right.$$
$$\left. + DR3\left(\frac{(A3)^2}{A3+A4} + \frac{(A3)^2}{A2+A3}\right) + DR4\left(\frac{(A4)^2}{A4+A1} + \frac{(A4)^2}{A3+A4}\right)\right]$$

(26)

This equation is similar to equations (6) and (14) above. Next, a test weight is placed over each of the load cells in turn and the output or span for each position recorded. Then, by following the above steps of the equations (7) through (11), equation (12) becomes equation (24) as follows:

$$\text{Span } 1_N = \text{Span } 1_0\left(\frac{(A1)^2}{A1+A2} + \frac{(A1)^2}{A4+A1}\right)_N$$

$$\text{Span } 2_N = \text{Span } 2_0\left(\frac{(A2)^2}{A2+A3} + \frac{(A2)^2}{A1+A2}\right)_N$$

(27)

$$\text{Span } 3_N = \text{Span } 3_0\left(\frac{(A3)^2}{A3+A4} + \frac{(A3)^2}{A2+A3}\right)_N$$

$$\text{Span } 4_N = \text{Span } 4_0\left(\frac{(A4)^2}{A4+A1} + \frac{(A4)^2}{A3+A4}\right)_N$$

Thus, when a bridge circuit in accordance with Figure 11 is employed in a scale, the values of the compensating series resistors are determined by a series of iterative computations performed in accordance with equations (27) until all of the Spans are substantially equal in the same way as described above with reference to equations (12) and (15). The values of the compensating resistors can be calculated from the resulting A's from the following equation

$$T = \frac{R(1-A)}{A}$$

The accuracy of the compensation is determined in part by size of the decrement of the A's employed in the iterative computations. In addition, when desired or required additional series of iterative computations may be performed using the results of the previous series as the beginning or Span for the next series of computations.

Figure 12 shows a bridge circuit similar to the bridge circuit of Figure 11 wherein a different compensating pattern is involved. In the arrangement of Figure 12 the pattern of connections of the strain

EP 0 101 247 B1

gages to the bridge is such that greater compensation is required between certain of the load cells than is required between other of the load cells, as, for example, the load cells of a long scale as shown in Figure 6.

For scales incorporating strain gage bridge circuits in accordance with Figure 12, the values of the compensating resistors are determined in substantially the same manner as described above for the bridge circuit of Figure 11. After the equations are so determined, a test weight is placed over each of the load cells in turn and the results recorded. Then a series of iterative calculations are performed as above to determine values of the respective A's and then the values of the compensating resistors.

Figure 13 shows a gage plate scale arrangement (see Patent No. 4,261,429) which may be compensated in a manner similar to the compensations of the scale arrangements shown in Figures 1 through 6. Here the load cells are integral with the scale platform and are formed between two slots cut in the platform near the corners. The free ends of the load cells support the scale platform. The strain gages are mounted on the load cells and may be connected in any one of the electrical bridge circuits of Figures 7 through 12 and compensated in the manners described above.

## Claims

1. Weighing apparatus comprising a load receiving platform, at least four load cells supporting the platform, each of the load cells (11—14) having only two strain gages (18—21, R1—R4) mounted thereon, the strain gages of the load cells being connected in at least one electrical bridge circuit to provide a signal indicative of the magnitude of the load on the platform (10), and compensating resistors (T1—T4, S1—S4) connected in circuit with at least one strain gage (18—21, R1—R4) of at least all but one of the load cells (11—14) to substantially eliminate changes in the output of the bridge circuit with changes in the position of the load on the platform.

2. Weighing apparatus according to Claim 1, characterized in that the compensating resistors (T1—T4) are connected in series with the gages (18—21, R1—R4).

3. Weighing apparatus according to Claim 1, characterized in that the compensating resistors (T1—T4) are connected in parallel with the gages (18—21, R1—R4).

4. Weighing apparatus according to Claim 1, characterized in that each load cell (11—14) has a strain gage subject to tension and a strain gage subject to compression, corresponding gages from each of half the load cells being connected in one arm of the bridge circuit and the other gage from each of the same load cells connected in the same adjacent arm of the bridge circuit.

5. Weighing apparatus according to Claim 1, characterized in that the compensating resistors (T1—T4) are connected in circuit with individual strain gages (18—21, R1—R4) to modify the response of the respective individual strain gage.

6. Weighing apparatus according to Claim 1, characterized in that the strain gages (18—21, R1—R4) of each load cell (11—14) are connected in adjacent arms of the bridge circuit, and a single resistor (T1—T4) is connected to both of the strain gages of at least all but one of the load cells.

7. Weighing apparatus according to Claim 1, characterized in that the strain gages (18—21, R1—R4) of each load cell (11—14) are connected in adjacent arms of the bridge circuit, and a resistor (T1—T4) is connected between intermediate points of at least all but one of the pairs of adjacent arms of the bridge circuit.

8. Weighing apparatus according to any preceding claim characterized in having only four load cells.

9. Weighing apparatus according to Claim 8, characterized in that the gages (18—21, R1—R4) of each arm of the bridge circuit are in series, the respective gages of each load cell are positioned adjacent each other in different arms of the bridge and a compensating resistor (T1—T4) is connected across the combination of adjacent gages of three of the load cells (11—14).

10. Weighing apparatus according to any of the preceding claims, characterized in that said load cells (11—14) are beams constructed as integral parts of said platform (10), each beam having a free end and a fixed end merging into said platform (10).

11. A method of compensating a scale having at least four load cells and only two strain gages per load cell, comprising the steps of arranging the strain gages (18—21) of the load cells (11—14) in a bridge circuit to provide an output signal representative of a load on the scale, placing a load on the scale sequentially at a number of locations and obtaining a load indication for each of said locations, utilizing the load indications in calculating the values of compensating resistors (T1—T4) required to substantially eliminate changes in the output of the bridge circuit with changes in the position of a load on the scale, and connecting compensating resistors (T1—T4) of appropriate value in circuit with at least one strain gage of at least all but one of the load cells.

12. A method according to Claim 11 for compensating a scale having no more than four load cells, characterized by the steps of arranging the gages of each arm of the bridge circuit in series, arranging the respective gages of each load cell (11—14) adjacent each other in different arms of the bridge, and connecting a compensating resistor (T1—T4) across the combination of adjacent gages of some of the load cells.

13. A method according to Claim 11 characterized by the step of connecting compensating resistors (T1—T4) in series with the appropriate gages.

14

14. A method according to Claim 11 characterized by the step of connecting compensating resistors (T1—T4) in parallel with the appropriate gages.

15. A method according to Claim 11 for compensating N load cells each having a strain gage subject to tension and a strain gage subject to compression, characterized by the steps of connecting corresponding gages from each of half the load cells in one arm of the bridge circuit and connecting the other gage from each of the same load cells in the same adjacent arm of the bridge circuit.

16. A method according to Claim 11 characterized by the step of utilizing the load indications in calculating the values of compensating resistors (T1—T4) required to be connected in circuit with certain individual strain gages (18—21, R1—R4) to render the output of the bridge circuit substantially independent of the location of a load on the scale.

17. A method according to Claim 11 characterized in that said scale has four load cells and said load indications are utilized to calculate the values of compensating resistors (T1—T4) required to be connected in circuit with at least one of the strain gages (18—21, R1—R4) of each of at least three of the load cells (11—14) to render the output of said bridge circuit substantially independent of the location of a load on the scale.

18. A method according to Claim 11 characterized in that the scale includes only four load cells, and compensating resistors (T1—T4) are connected in circuit with at least one strain gage (18—21, R1—R4) of at least three of the load cells (11—14).

19. A method according to any of claims 11 to 18, characterized in that the values of the compensating resistors (T1—T4) are determined by calculation.

20. A method of compensating a scale having a platform supported by at least four load cells having only two strain gages per load cell connected in an electrical bridge circuit, comprising the steps of determining the responses of some of the load cells (11—14) by placing a test weight over each of those load cells in sequence and reading the outputs of the bridge circuit, and connecting compensating resistors (T1—T4) in circuit with the gages (18—21) of certain of the load cells to reduce off-center loading using the determined responses to calculate attenuated responses for the load cells in small decrements until the differences in the calculated responses are minimized within desired limits, and calculating from the responses the values of the compensating resistors to be connected in circuit with at least one strain gage of at least all but one of the load cells.

21. A method according to Claim 20 characterized by repeating the steps of the method of Claim 20.

22. A method according to Claim 20 characterized by the step of connecting compensating resistors (T1—T4) of calculated value in circuit with the strain gages (18, 21, R1—R4) of all but one of the load cells (11—14).

**Patentansprüche**

1. Wägevorrichtung mit einer Lastaufnahme-Plattform, mit wenigstens 4 die Plattform tragenden Kraftmessdosen, wobei jede der Kraftmessdosen (11—14) nur zwei darauf angebrachte Dehnungsmesser (18—21, R1—R4) aufweist und wobei die Dehnungsmesser der Kraftmessdosen in wenigstens einer elektrischen Brückenschaltung verbunden sind, um ein von der Größe der Last auf der Plattform (10) abhängiges Signal zu erzeugen, .und mit Kompensationswiderständen (T1—T4, S1—S4), die mit wenigstens einem Dehnungsmesser (18—21, R1—R4) von wenigstens allen Kraftmessdosen (11—14) außer einer schaltungsmäßig verbunden sind, um Änderungen des Ausgangssignals der Brückenschaltung bei Änderungen der Position der Last auf der Plattform im wesentlichen zu eliminieren.

2. Wägevorrichtung nach Anspruch 1, dadurch gekennzeichnet, daß die Kompensationswiderstände (T1—T4) in Reihe zu den Dehnungsmessern (18—21, R1—R4) geschaltet sind.

3. Wägevorrichtung nach Anspruch 1, dadurch gekennzeichnet, daß die Kompensationswiderstände (T1—T4) parallel zu den Dehnungsmessern (18—21, R1—R4) geschaltet sind.

4. Wägevorrichtung nach Anspruch 1, dadurch gekennzeichnet, daß jede Kraftmeßdose (11—14) einen einer Zugspannung ausgesetzten Dehnungsmesser und einen einem Druck ausgesetzten Dehnungsmesser aufweist, wobei korrespondierende Dehnungsmesser von jeder Hälfte der Kraftmeßdosen in einem Zweig der Brückenschaltung geschaltet und die anderen Dehnungsmesser der besagten Kraftmeßdosen im selben angrenzenden Zweig der Brückenschaltung geschaltet sind.

5. Wägevorrichtung nach Anspruch 1, dadurch gekennzeichnet, daß die Kompensationswiderstände (T1—T4) in Reihe mit individuellen Dehnungsmessern (18—21, R1—R4) geschaltet sind, um das Ansprechen der jeweiligen individuellen Dehnungsmesser zu modifizieren.

6. Wägevorrichtung nach Anspruch 1, dadurch gekennzeichnet, daß die Dehnungsmesser (18—21, R1—R4) jeder Kraftmeßdose (11—14) in angrenzenden Zweigen der Brückenschaltung geschaltet sind und daß ein einzelner Widerstand (T1—T4) mit beiden Dehnungsmessern wenigstens aller Kraftmeßdosen außer einer verbunden ist.

7. Wägevorrichtung nach Anspruch 1, dadurch gekennzeichnet, daß die Dehnungsmesser (18—21, R1—R4) jeder Kraftmeßdose (11—14) in angrenzenden Zweigen der Brückenschaltung geschaltet sind und daß ein Widerstand (T1—T4) zwischen Verbindungspunkten von wenigstens allen Paaren von angrenzenden Zweigen der Brückenschaltung außer einem geschaltet ist.

15

8. Wägevorrichtung nach einem der vorhergehenden Ansprüche, dadurch gekennzeichnet, daß nur 4 Kraftmeßdosen vorgesehen sind.

9. Wägevorrichtung nach Anspruch 8, dadurch gekennzeichnet, daß die Dehnungsmesser (18—21, R1—Re) jedes Brückenzweigs in Reihe geschaltet sind, wobei die jeweiligen Dehnungsmesser jeder Kraftmeßdose in verschiedenen Brückenzweigen aneinanderliegend angeordnet sind und wobei ein Kompensationswiderstand (T1—T4) parallel zur Kombination der aneinanderliegenden Dehnungsmesser von drei der Kraftmeßdosen (11—14) geschaltet ist.

10. Wägevorrichtung nach einem der vorhergehenden Ansprüche, dadurch gekennzeichnet, daß diese Kraftmeßdosen (11—14) Träger sind, die als integrale Partien dieser Plattform (10) konstruiert sind, wobei jeder Träger ein freies Ende und ein fixiertes, in der Plattform (10) aufgehendes Ende aufweist.

11. Verfahren zur Kompensierung einer Waage mit wenigstens 4 Kraftmeßdosen und nur zwei Dehnungsmessern pro Kraftmeßdose, das die Schritte aufweist: Anordnen der Dehnungsmesser (18—21) der Kraftmeßdosen (11—14) in einer Brückenschaltung zu Erzeugung eines von der Last auf der Waage abhängigen Ausgangssignals, Aufbringen einer Last auf die Waage nacheinander an verschiedenen Stellen und Erlangen einer Lastanzeige für jede dieser Stellen, Verwenden der Lastanzeigen zur Berechnung der Werte von Kompensationswiderständen (T1—T4), die erforderlich sind, um Änderungen des Ausgangssignals der Brückenschaltung bei Änderungen der Position einer Last auf der Waage im wesentlichen zu eliminieren und schaltungsmäßiges Verbinden der Kompensationswiderstände (T1—T4) geeigneten Werts mit wenigstens einem Dehnungsmesser von wenigstens allen Kraftmeßdosen außer einer.

12. Verfahren nach Anspruch 11 zur Kompensierung einer Waage mit nicht mehr als 4 Kraftmeßdosen, gekennzeichnet durch die Schritte: Anordnung der Dehnungsmesser jedes Brückenzweigs in Reihe, Anordnung der jeweiligen Dehnungsmesser jeder Kraftmeßdose (11—14) aneinanderliegend in verschiedenen Brückenzweigen, und Schaltung eines Kompensationswiderstandes (T1—T4) parallel zur Kombination der aneinanderliegenden Dehnungsmesser einiger der Kraftmeßdosen.

13. Verfahren nach Anspruch 11, gekennzeichnet durch den Schritt, die Kompensationswiderstände (T1—T4) in Reihe zu den zugehörigen Dehnungsmessern zu schalten.

14. Verfahren nach Anspruch 11, gekennzeichnet durch den Schritt, die Kompensationswiderstände (T1—T4) parallel zu den zugehörigen Dehnungsmessern zu schalten.

15. Verfahren nach Anspruch 11, zur Kompensierung von N Kraftmeßdosen, von denen jede einen einer Zugspannung ausgesetzten Dehnungsmesser und einen einem Druck ausgesetzten Dehnungsmesser aufweist, gekennzeichnet durch die Schritte: Schalten korrespondierender Dehnungsmesser von jeder Hälfte der Kraftmeßdosen in einen Arm der Brückenschaltung und Schalten der anderen Dehnungsmesser von jeder der besagten Kraftmeßdosen in denselben angrenzenden Arm der Brückenschaltung.

16. Verfahren nach Anspruch 11, gekennzeichnet durch den Schritt, die Lastanzeigen zur Berechnung der Werte von Kompensationswiderständen (T1—T4) zu verwenden, die noch mit gewissen individuellen Dehnungsmessern (18—21, R1—R4) schaltungsmäßig verbunden werden müssen, um das Ausgangssignal der Brückenschaltung im wesentlichen unabhängig von der Anordnung einer Last auf der Waage zu machen.

17. Verfahren nach Anspruch 11, dadurch gekennzeichnet, daß die Waage vier Kraftmeßdosen aufweist und daß diese Lastanzeigen zur Berechnung der Werte von Kompensationswiderständen (T1—T4) verwendet werden, die noch mit wenigstens einem der Dehnungsmesser (18—21, R1—R4) jeder von wenigstens drei der Kraftmeßdosen (11—14) schaltungsmäßig verbunden werden müssen, um das Ausgangssignal der Brückenschaltung im wesentlichen unabhängig von der Anordnung einer Last auf der Waage zu machen.

18. Verfahren nach Anspruch 11, dadurch gekennzeichnet, daß die Waage nur vier Kraftmeßdosen aufweist, und daß Kompensationswiderstände (T1—T4) mit wenigstens einem Dehnungsmesser (18—21, R1—R4) von wenigstens drei der Kraftmeßdosen (11—14) schaltungsmäßig verbunden sind.

19. Verfahren nach einem der Ansprüche 11 bis 18, dadurch gekennzeichnet, daß die Werte der Kompensationswiderstände (T1—T4) durch Berechnung bestimmt werden.

20. Verfahren zur Kompensierung einer Waage mit einer Plattform, die von wenigstens 4 Kraftmeßdosen getragen wird und mit zwei Dehnungsmessern pro Kraftmeßdose, die in einer elektrischen Brückenschaltung angeordnet sind, wobei die Schritte vorgesehen sind: Bestimmen der Reaktion einiger der Kraftmeßdosen (11—14) während ein Testgewicht über jeder dieser Kraftmeßdosen positioniert wird und die Ausgangssignale der Brückenschaltung gelesen werden und schaltungsmäßiges Verbinden von Kompensationswiderständen (T1—T4) mit den Dehnungsmessern (18—21) von gewissen Kraftmeßdosen, um eine außermittige Belastung zu reduzieren, Verwenden der ermittelten Reaktionen um abgeschwächte Reaktionen für die Kraftmeßdosen in kleinen Dekrementen zu berechnen, bis die Differenzen der berechneten Reaktionen innerhalb gewünschter Grenzen minimiert sind, und Berechnen aus den Reaktionen die Werte der Kompensationswiderstände, die mit wenigstens einem Dehnungsmesser von wenigstens allen Kraftmeßdosen außer einer Schaltungsmäßig verbunden sind.

21. Verfahren nach Anspruch 20, gekennzeichnet durch die Wiederholung der Schritte des Verfahrens nach Anspruch 20.

22. Verfahren nach Anspruch 20, gekennzeichnet durch den Schritt, Kompensationswiderstände

16

(T1—T4) mit berechnetem Wert schaltungsmäßig mit den Dehnungsmessern (18, 21, R1—R4) aller Kraftmeßdosen (11—14) außer einer zu verbinden.

**Revendications**

1. Dispositif de pesage comprenant une plat-forme recevant la charge, au moins quatre boîtes dynamométriques supportant la plate-forme, seulement deux jauges de contrainte (18—21, R1—R4) étant montées sur chacune des boîtes dynamométriques (11—14), les jauges de contrainte des boîtes dynamométriques étant reliées en au moins un montage électrique en pont pour fournir un signal indicateur de la valeur de la charge présente sur la plate-forme (10), et des résistances de compensation (T1—T4, S1—S4) reliées en circuit avec au moins une jauge de contrainte (18—21, R1—R4) d'au moins toutes les boîtes dynamométriques (11—14) sauf une, pour éliminer sensiblement les modifications de la sortie du montage en pont dues à des modifications de la position de la charge sur la plate-forme.

2. Dispositif de pesage selon la revendication 1, caractérisé en ce que les résistances de compensation (T1—T4) sont reliées en série avec les jauges (18—21, R1—R4).

3. Dispositif de pesage selon la revendication 1, caractérisé en ce que les résistances de compensation (T1—T4) sont reliées en parallèle avec les jauges (18—21, R1—R4).

4. Dispositif de pesage selon la revendication 1, caractérisé en ce que chaque boîte dynamométrique (11—14) possède une jauge de contrainte soumise à la tension et une jauge de contrainte soumise à la compression, les jauges correspondantes de chacune de la moitié des boîtes dynamométriques étant reliées dans une branche du montage en pont, et l'autre jauge de chacune des mêmes boîtes dynamométriques étant reliée dans la même branche voisine du montage en pont.

5. Dispositif de pesage selon la revendication 1, caractérisé en ce que les résistances de compensation (T1—T4) sont reliées en circuit avec les jauges de contrainte individuelles (18—21, R1—R4) pour modifier la réponse de la jauge de contrainte individuelle respective.

6. Dispositif de pesage selon la revendication 1, caractérisé en ce que les jauges de contrainte (18—21, R1—R4) de chaque boîte dynamométrique (11—14) sont reliées dans des branches voisines du montage en pont, et une seule résistance (T1—T4) est reliée aux deux jauges de contraintes d'au moins toutes les boîtes dynamométriques sauf une.

7. Dispositif de pesage selon la revendication 1, caractérisé en ce que les jauges de contrainte (18—21, R1—R4) de chaque boîte dynamométrique (11—14) sont reliées dans des branches voisines du montage en pont, et une résistance (T1—T4) est reliée entre des points intermédiaires d'au moins toutes les paires, sauf une, de branches voisines du montage en pont.

8. Dispositif de pesage selon l'une quelconque des revendications précédentes, caractérisé en ce qu'il possède seulement quatre boîtes dynamométriques.

9. Dispositif de pesage selon la revendication 8, caractérisé en ce que les jauges (18—21, R1—R4) de chaque branche du montage en pont sont en série, les jauges respectives de chaque boîte dynamométrique sont positionnées voisines entre elles dans des branches différentes du montage en pont, et une résistance de compensation (T1—T4) est positionnée à travers la combinaison de jauges voisines de trois des boîtes dynamométriques (11—14).

10. Dispositif de pesage selon l'une quelconque des revendications précédentes, caractérisé en ce que les boîtes dynamométriques (11—14) sont des poutres solidaires de la plate-forme (10), chaque poutre possédant une extrémité libre et une extrémité fixe fusionnant dans la plate-forme (10).

11. Procédé de compensation d'une balance possédant au moins quatre boîtes dynamométriques et seulement deux jauges de contrainte par boîte dynamométrique, comprenant les étapes consistant à disposer les jauges de contrainte (18—21) des boîtes dynamométriques (11—14) en un montage en pont pour fournir un signal de sortie représentatif d'une charge présente sur la plate-forme, à placer une charge sur la plate-forme séquentiellement à un certain nombre d'emplacements et à obtenir une indication de charge pour chacun de ces emplacements, à utiliser les indications de charge pour calculer les valeurs de résistances de compensation (T1—T4) requises pour quasiment éliminer les modifications de la sortie du montage en pont dues aux modifications de la position d'une charge sur la balance, et à relier des résistance de compensation (T1—T4) de valeur adéquate en circuit avec au moins une jauge de contrainte d'au moins toutes les boîtes dynamométriques sauf une.

12. Procédé selon la revendication 11 pour compenser une balance ne possédant pas plus de quatre boîtes dynamométriques, caractérisé par les étapes consistant à disposer en série les jauges de chaque branche du montage en pont, à disposer les jauges respectives de chaque boîte dynamométrique (11—14) voisines entre elles dans des branches différents du montage en pont, et à relier une résistance de compensation (T1—T4) à travers la combinaison de jauges voisines de certaines des boîtes dynamométriques.

13. Procédé selon la revendication 11, caractérisé par l'étape consistant à relier des résistances de compensation (T1—T4) en série avec les jauges appropriées.

14. Procédé selon la revendication 11, caractérisé par l'étape consistant à relier des résistances de compensation (T1—T4) en parallèles avec les jauges appropriées.

15. Procédé selon la revendication 11 pour compenser N boîtes dynamométriques possédant chacune une jauge de contrainte soumise à la tension et une jauge de contrainte soumise à la compression, caractérisé par les étapes consistant à relier les jauges correspondantes de chacune de la moitié des boîtes dynamométriques dans une branche du montage en pont, et à relier l'autre jauge de chacune des mêmes boîtes dynamométriques dans la même branche voisine du montage en pont.

16. Procédé selon la revendication 11, caractérisé par l'étape consistant à utiliser les indications de charge pour calculer les valeurs de résistances de compensation (T1—T4) requises pour être reliées en circuit avec certaines jauges de contrainte individuelles (18—21, R1—R4) afin de rendre la sortie du montage en pont quasiment indépendante de l'emplacement d'une charge sur la balance.

17. Procédé selon la revendication 11, caractérisé en ce que ladite balance possède quatre boîtes dynamométriques et lesdites indications de charge sont utilisées pour calculer les valeurs des résistances de compensation (T1—T4) requises pour être reliées en circuit avec au moins une des jauges de contrainte (18—21, R1—R4) de chacune d'au moins trois des boîtes dynamométriques (11—14), afin de rendre la sortie dudit montage en pont sensiblement indépendante de l'emplacement d'une charge sur la balance.

18. Procédé selon la revendication 11, caractérisé en ce que la balance comprend seulement quatre boîtes dynamométriques, et des résistances de compensation (T1—T4) sont reliées en circuit avec au moins une jauge de contrainte (18—21, R1—R4) d'au moins trois des boîtes dynamométriques (11—14).

19. Procédé selon l'une quelconque des revendications 11 à 18, caractérisé en ce que les valeurs des résistances de compensation (T1—T4) sont déterminées par le calcul.

20. Procédé de compensation d'une balance possédant une plate-forme supportée par au moins quatre boîtes dynamométriques possédant seulement deux jauges de contrainte par boîte dynamométrique reliées en un montage électrique en pont, comprenant les étapes consistant à déterminer les réponses de certaines des boîtes dynamométriques (11—14) en plaçant séquentiellement un poids d'essai sur chacune de ces boîtes dynamométriques et en lisant les sorties du montage en pont, et à relier des résistances de compensation (T1—T4) en circuit avec les jauges (18—21) de certaines des boîtes dynamométriques, afin de réduire le chargement décentré, à utiliser les réponses déterminées pour calculer pour les boîtes dynamométriques des réponses atténuées par petits décréments jusqu'à ce que les différences dans les réponses calculées soient minimisées à l'intérieur de limites souhaitées, et à calculer, à partir des réponses ainsi obtenues, les valeurs des résistances de compensation à relier en circuit avec au moins une jauge de contrainte d'au moins toutes les boîtes dynamométriques sauf une.

21. Procédé selon la revendication 20, caractérisé par la répétition des étapes du procédé selon la revendication 20.

22. Procédé selon la revendication 20, caractérisé par l'étape consistant à relier des résistances de compensation (T1—T4) de valeur calculée en circuit avec les jauges de contrainte (18—21, R1—R4) de toutes les boîtes dynamométriques (11—14) sauf une.

EP  0 101 247  B1

FIG. 1

FIG. 2

FIG. 3

FIG. 4

FIG. 5

1

*FIG. 6*

*FIG. 7*

POWER

R1   R1^T   R1^C   R2

R4^T   T1   R2^C

T4   T2

R4^C   T3   R2^T

R4   R3^C   R3^T   R3

INDICATOR

2

_FIG. 8_

_FIG. 9_

EP 0 101 247 B1

FIG. 10

POWER

91

92

INDICATOR

POWER

1110
RI
R4ᵀ  RIᵀ
T4   TI

RIᶜ  R2ᶜ
T1   T2
1111
R2

R4
R4ᶜ  R3ᶜ
T4   T3
1113

R2ᵀ  R3ᵀ
T2   T3
R3
1112

INDICATOR

FIG. 11

4

FIG. 12

FIG. 13